# EUROPÄISCHE PATENTSCHRIFT

(11) **EP 2 406 102 B1**
(45) Veröffentlichungstag und Bekanntmachung des Hinweises auf die Patenterteilung: **13.09.2017**
(21) Anmeldenummer: 10712894.4
(22) Anmeldetag: 09.03.2010
(51) Int. Cl.: B60N 2/70

(54) **FAHRZEUGSITZPOLSTER**
VEHICLE SEAT CUSHION
COUSSIN DE SIÈGE DE VÉHICULE

(30) Priorität: 09.03.2009 DE 102009011736
(43) Veröffentlichungstag der Anmeldung: 18.01.2012
(73) Patentinhaber: Adient Luxembourg Holding S.à r.l., 2453 Luxembourg (LU)
(72) Erfinder: LHOMMEAU, Jean-Christophe, 67880 Krautergersheim (FR); FLUHR, Antoine, 67370 Griesheim-sur Souffel (FR); RUTTER, Patrick, 67540 Ostwald (FR); STEINMEIER, Horst, 32312 Lübbecke (DE); HUGUES, Laurent, 67120 Soultz Les Bains (FR); RIEZLER, Bernhard, 5541 Altenmarkt im Pongau (AT)
(74) Vertreter: Wolff, Felix
(86) Internationale Anmeldenummer: PCT/EP2010/001456
(87) Internationale Veröffentlichungsnummer: WO 2010/102785

(56) Entgegenhaltungen:
- EP-A1- 1 702 883
- EP-A2- 0 247 708
- EP-A2- 2 003 089
- WO-A1-03/072391
- DE-U1- 20 202 042

## Beschreibung

Die vorliegende Erfindung betrifft ein Fahrzeugsitzpolster, das aus mindestens zwei Schaumstoffmaterialien mit jeweils unterschiedlicher Härte besteht. Des Weiteren betrifft die vorliegende Erfindung ein Verfahren und ein Werkzeug zur Herstellung eines derartigen Sitzpolsters.

Fahrzeugsitze weisen heutzutage Polster auf, die sowohl in dem sogenannten Sitzteil als auch in der Rückenlehne angeordnet sind. Diese Polster dienen zum einen dazu, den Sitzinsassen einen möglichst sicheren Halt in dem Fahrzeugsitz zu gewähren aber auch um den Sitzkomfort zu erhöhen. Dafür werden oftmals Fahrzeugsitzpolster vorgesehen, die aus mindestens zwei Schaumstoffmaterialien mit jeweils unterschiedlicher Härte bestehen, wobei das Schaumstoffmaterial, das sich näher am Fahrzeuginsassen befindet, in der Regel eine geringere Härte aufweist als das Schaumstoffmaterial, das weiter vom Fahrzeuginsassen entfernt ist. Die DE20202042 zeigt ein Fahrzeugsitzpolster gemäß dem Oberbegriff des Anspruchs 1. Die Schaumstoffmaterialien wurden in der Vergangenheit in der Regel miteinander verklebt, was zeitaufwendig, materialintensiv ist und einer Nachbearbeitung bedarf. Die Herstellung solcher Fahrzeugsitzpolster war demnach in der Vergangenheit vergleichsweise aufwendig.

Es war deshalb die Aufgabe der vorliegenden Erfindung ein Fahrzeugsitzpolster zur Verfügung zu stellen, das einfacher und kostengünstiger herzustellen ist. Eine weitere Aufgabe der vorliegenden Erfindung war es ein Verfahren und ein Werkzeug zur Verfügung zu stellen, mit dem ein Fahrzeugsitzpolster, das aus mindestens zwei Schaumstoffmaterialien mit jeweils unterschiedlicher Härte besteht, einfacher herstellbar ist.

Gelöst wird die Aufgabe mit einem Fahrzeugsitzpolster gemäß Anspruch 1, das aus mindestens Schaumstoffmaterialien mit jeweils unterschiedlicher Härte besteht, wobei zwischen den Schaumstoffmaterialien ein Vlies angeordnet ist.

Die vorliegende Erfindung betrifft ein Fahrzeugsitzpolster, das in dem Sitzteil und/oder in der Rückenlehne eines Fahrzeugsitzes vorgesehen sein kann. Ein derartiger Fahrzeugsitz, der in einem beliebigen Fortbewegungsmittel angeordnet sein kann, bietet einer oder mehreren Personen Platz. Bei dem erfindungsgemäßen Fahrzeugsitz kann es sich folglich auch um eine Sitzbank handeln. Dieses Fahrzeugsitzpolster weist mindestens zwei Schaumstoffmaterialien auf, die jeweils eine unterschiedliche Härte aufweisen, das heißt bei denen die Kraft oder der Druck, der für eine bestimmte Verformung des jeweiligen Schaumstoffmaterials benötigt wird, unterschiedlich hoch ist. Vorzugsweise ist die Ausrichtung der Grenzfläche der beiden Schaumstoffmaterialien und damit des Vlies jeweils im wesentlichen dieselbe wie die Ausrichtung des Fahrzeugpolsters, d.h. im Sitzbereich im wesentlichen horizontal und im Rückenlehnenbereich im wesentlichen vertikal. In der Regel wird das weichere Schaumstoffmaterial näher an dem Fahrzeuginsassen angeordnet sein als das härtere Schaumstoffmaterial. Das weichere Schaumstoffmaterial dient in der Regel insbesondere zur Komforterhöhung des Fahrzeuginsassen während das härtere Schaumstoffmaterial insbesondere zur Stabilisierung der Sitzposition und/oder zur Vermeidung von Verletzungen beispielsweise bei einem Unfall dient.

Als Schaumstoffmaterialien kommen alle dem Fachmann geläufigen Schaumstoffmaterialien in Frage. Die Schaumstoffmaterialien des Fahrzeugsitzpolsters können aus dem gleichen oder unterschiedlichen Werkstoffen hergestellt werden, wobei in der Regel unterschiedliche Werkstoffe bevorzugt werden. Vorzugsweise handelt es sich jedoch bei beiden Schaumstoffen um Polyurethan-Schäume, wobei jedoch die Ausgangskomponenten für die Polymerisation vorzugsweise unterschiedlich sind.

Erfindungsgemäß ist nun zwischen den beiden Schaumstoffmaterialien ein Flies angeordnet, das sich vorzugsweise über die gesamte Grenzfläche zwischen dem weicheren und dem härteren Schaumstoffmaterial erstreckt. Vorzugsweise ist das Vlies aus einem Kunststoffmaterial insbesondere Polyethylen und/oder Polypropylen gefertigt.

In einer weiteren bevorzugten Ausführungsform ist das Vlies ein Gewebe, insbesondere ein Kunststoffgewebe. Die Struktur des Gewebes wird dabei besonders bevorzugt so gewählt, dass sich die beiden Kunststoffmaterialien im flüssigen Zustand wenn überhaupt dann nur in einem sehr geringen Umfang miteinander vermischen. Besonders bevorzugt ist das Gewebe jedoch so vorgesehen, dass es von mindestens einem der flüssigen Kunststoffmaterialien zumindest teilweise durchdrungen werden kann, so dass ganz besonders bevorzugt mit mindestens einem der Schaumstoffmaterialien vorzugsweise mit beiden Schaumstoffmaterialien ein Stoffschluss ergibt.

Vorzugsweise beträgt die Dicke des weicheren Schaumstoffmaterials mindestens 5 mm besonders bevorzugt > 100 mm.

In einer weiteren bevorzugten Ausführungsform beträgt die Dicke des härteren Schaumstoffmaterials mindestens 5 mm besonders bevorzugt > 100 mm.

Weiterhin bevorzugt ist die Dicke des weicheren und/oder des härteren Schaumstoffmaterials über die Breit und/oder über die Länge des Sitzpolsters nicht konstant, sondern variiert gemäß den jeweiligen lokalen Anforderungen an Komfort bzw. Sitzstabilität.

Weiterhin wird die Aufgabe mit einem Verfahren zur Herstellung des Sitzpolsters nach einem der voranstehenden Ansprüche gelöst, bei dem ein erstes flüssiges Schaumstoffmaterial in ein Werkzeug eingefüllt, dieses Schaumstoffmaterial mit einem Vlies abgedeckt, ein zweites flüssiges Schaumstoffmaterial in das Werkzeug eingefüllt wird und beide Schaumstoffmaterialien zumindest teilweise gleichzeitig in dem Werkzeug härten.

Bei dem erfindungsgemäßen Verfahren wird zunächst ein erstes flüssiges Schaumstoffmaterial in ein Werkzeug eingefüllt, das dann mit dem Vlies abgedeckt wird, so dass vorzugsweise eine der beiden Oberflächen mit dem ersten flüssigen Schaumstoffmaterial in Kontakt kommt. Sodann wird ein zweites flüssiges Schaumstoffmaterial auf die zweite Oberfläche des Flies gefüllt und anschließend härten die beiden flüssigen Schaumstoffmaterialien in dem Werkzeug aus. Dabei entsteht vorzugsweise ein Stoffschluss zwischen mindestens einem der beiden Schaumstoffmaterialien und dem Vlies und/oder zwischen den beiden Schaumstoffmaterialien. Vorzugsweise wird erst das weichere und dann das härtere Schaumstoffmaterial in das Werkzeug eingefüllt.

Es ist jedoch auch möglich die beiden Schaumstoffmaterialien zumindest teilweise gleichzeitig in das Werkzeug einzufüllen, wobei das Vlies die flüssigen Schaumstoffmaterialien zumindest im wesentlichen voneinander getrennt hält. Nach dem Befüllen härten beide Schaumstoffmaterialien zumindest teilweise zeitgleich aus.

Die erfindungsgemäßen Verfahren haben den Vorteil, dass beide Schaumstoffmaterialien gleichzeitig aushärten, ohne dass sie sich in unzulässiger Weise vermischen. Dadurch kann die Produktionszeit des erfindungsgemäßen Sitzpolsters erheblich reduziert vorzugsweise halbiert werden.

Vorzugsweise wird das Vlies an einem Rahmen vorgesehen, insbesondere auf einen Rahmen gespannt. Dieser Rahmen ist vorzugsweise beweglich, besonders bevorzugt dreh- oder schwenkbeweglich vorgesehen und wird beispielsweise nach dem Einfüllen des ersten Schaumstoffmaterials in das Werkzeug auf dieses Schaumstoffmaterial abgesenkt, bevor der Rahmen von einem zweiten Werkzeugteil abgedeckt wird, das dann mit dem zweiten Schaumstoffmaterial befüllt wird.

Eine weitere Lösung der Aufgabe besteht in einem Werkzeug zur Herstellung eines Fahrzeugsitzpolsters nach einem der voranstehenden Ansprüche, wobei es ein Unterteil, ein Oberteil und einen dazwischen angeordneten Rahmen, der das Vlies hält, aufweist.

Alle oben gemachten Ausführungen gelten für alle Erfindungsgegenstände gleichermaßen.

Im Folgenden wird die Erfindung anhand der Figuren 1 bis 3 erläutert. Diese Erläuterungen sind lediglich beispielhaft und schränken den allgemeinen Erfindungsgedanken nicht ein. Die Ausführungen gelten für alle Erfindungsgegenstände gleichermaßen.
- **Figur 1**: zeigt das erfindungsgemäße Fahrzeugsitzpolster.
- **Figuren 2 und 3**: zeigen das erfindungsgemäße Werkzeug.

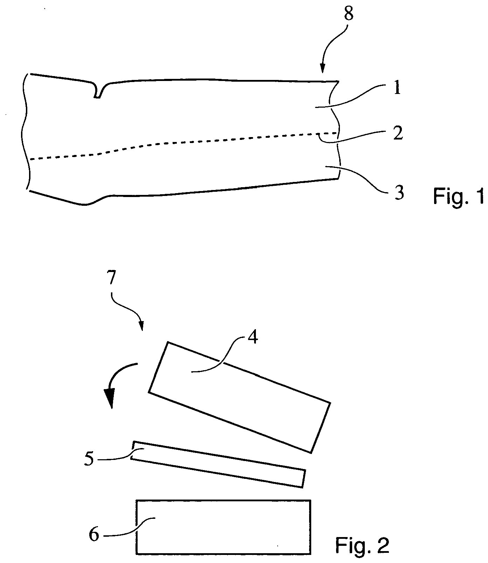

Figur 1 zeigt einen Ausschnitt des Fahrzeugsitzpolsters das für das Sitzteil des Fahrzeugsitzes eingesetzt wird, Dieses Fahrzeugsitzpolster weist in seinem unteren Bereich eine Schicht mit einem vergleichsweise harten Schaumstoff 3 und in seinem oberen Bereich eine Schicht mit einem vergleichsweise weichen Schaumstoffmaterial 1 auf. Die beiden Schaumstoffmaterialien 1, 3 sind durch ein Flies 2 getrennt. Die beiden Schichten haben im wesentlichen dieselbe Ausrichtung wie die Kontur des Sitzpolsters, d.h. verlaufen hier im wesentlichen horizontal. Dementsprechend ist das Vlies hier auch im wesentlichen horizontal ausgerichtet. Bei einem Sitzpolster der Rückenlehne ist der Verlauf der Schichten und des Vlies im wesentlichen vertikal. Es ist deutlich zu erkennen, dass die Dicke sowohl des Schaumstoffmaterials 1 als auch des Schaumstoffmaterials 3 über die Ausdehnung des Sitzpolsters variiert. In dem vorliegenden Fall handelt es sich bei beiden Schaumstoffmaterialien um einen Polyurethan-Schaumstoff, der auch Basis vom MDI oder TDI hergestellt ist. Die Schäume weisen eine Dichte zwischen 30 und 90 g/l auf. Das weichere Schaumstoffmaterial hat vorzugsweise eine Härte zwischen 3 und 20 kPas (40%, 4 Zyklen) und das härtere Schaumstoffmaterial eine Härte von 3 bis 20 kPas (40%, 4 Zyklen).

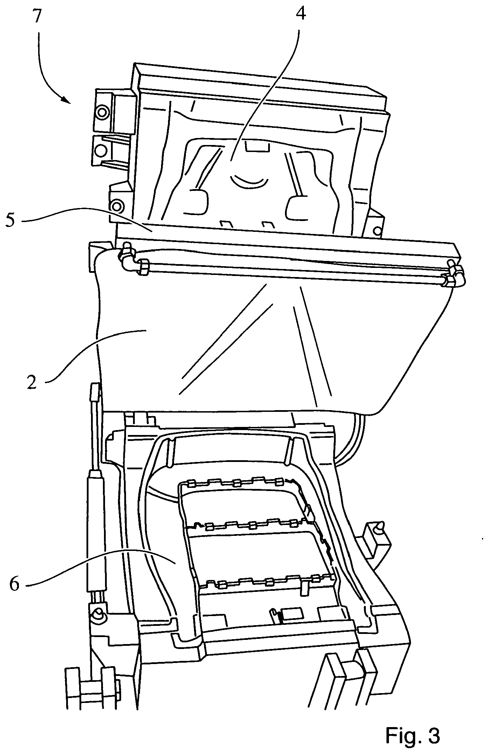

Die Figuren 2 und 3 zeigen das erfindungsgemäße Werkzeug, das aus einem Unterwerkzeug 6, einem Oberwerkzeug 4 sowie einem Rahmen 5 besteht. Die Werkzeuge 4, 6 stellen jeweils die Form für eines der Schaumstoffmaterialien 1, 3 zur Verfügung, während der Rahmen 5 zur Aufnahme des Vlies dient. Sowohl der Rahmen 5 als auch das Oberwerkzeug 4 sind in dem vorliegenden Fall beweglich, insbesondere drehbeweglich, vorgesehen. Nach dem das Unterteil 6 des Werkzeugs mit einem ersten flüssigen Schaumstoffmaterial, vorzugsweise dem weicheren Schaumstoffmaterial befüllt worden ist, wird der Rahmen 5, an dem das Vlies vorgesehen ist, auf das Unterteil 6 abgesenkt, so dass vorzugsweise das Vlies das flüssige Schaumstoffmaterial in dem Unterwerkzeug 6 berührt. Danach wird das Oberteil 4 auf den Rahmen 5 abgesenkt und dadurch das Werkzeug zumindest weitestgehend abgedichtet. Vorher, gleichzeitig und/oder danach wird das zweite flüssige , vorzugsweise das härtere, Schaumstoffmaterial in das Werkzeug eingefüllt. Beide Schaumstoffmaterialien härten dann im wesentlichen gleichzeitig zumindest teilweise vorzugsweise vollständig aus, bevor das Werkzeug wieder geöffnet wird und das nunmehr fertige, erfindungsgemäße Fahrzeugsitzpolster aus der Form entnommen werden kann. Das Werkzeug steht dann für die Herstellung eines weiteren Sitzpolsters zur Verfügung.

### Bezugszeichenliste:

- 1: weiches Schaumstoffmaterial
- 2: Vlies
- 3: hartes Schaumstoffmaterial
- 4: Oberteil des Werkzeugs
- 5: Rahmen
- 6: Unterteil des Werkzeug
- 7: Werkzeug
- 8: Polster

## Patentansprüche

1. Fahrzeugsitzpolster (8), das aus mindestens zwei Schaumstoffmaterialien (1, 3) mit jeweils unterschiedlicher Härte besteht, wobei die zwei Schaumstoffmaterialien (1, 3) aus dem gleichen oder unterschiedlichen Werkstoffen hergestellt wurden, wobei zwischen den Schaumstoffmaterialien (1, 3) ein Vlies (2) angeordnet ist, **dadurch gekennzeichnet, dass** sich das Vlies (2) über die gesamte Grenzfläche zwischen dem weicheren und dem härteren Schaumstoffmaterial (1, 3) erstreckt, wobei das Gewebe des Vlieses (2) so vorgesehen ist, dass es von mindestens einem der zwei Schaumstoffmaterialien (1, 3) im flüssigen Zustand durchdringbar ist, wobei das Vlies (2) dazu ausgebildet ist, mit mindestens einer der beiden Schaumstoffmaterialien (1, 3) eine stoffschlüssige Verbindung einzugehen, wobei beide Schaumstoffmaterialien (1, 3) gleichzeitig aushärtbar sind, wobei die Schaumstoffmaterialien (1, 3) einen Polyurethan-Schaumstoff umfassen, welcher auf Basis von MDI oder TDI hergestellbar ist, wobei Schäume der Schaumstoffmaterialien (1, 3) eine Dichte zwischen 30 und 90 g/l aufweisen, wobei das weichere Schaumstoffmaterial eine Härte zwischen 3 und 20 kPa bei 40% und 4 Zyklen hat, wobei das härtere Schaumstoffmaterial eine Härte von 3 bis 20 kPa bei 40% und 4 Zyklen hat.

2. Fahrzeugsitzpolster nach Anspruch 1, **dadurch gekennzeichnet, dass** das Vlies (2) ein Kunststoffmaterial, insbesondere ein Kunststoffgewebe, ist.

3. Fahrzeugsitzpolster nach einem der voranstehenden Ansprüche, **dadurch gekennzeichnet, dass** die Dicke des weichen Schaumstoffmaterials (1) mindestens 5 mm beträgt.

4. Fahrzeugsitzpolster nach einem der voranstehenden Ansprüche, **dadurch gekennzeichnet, dass** die Dicke des harten Schaumstoffmaterials (3) mindestens 5 mm beträgt.

5. Fahrzeugsitzpolster nach einem der voranstehenden Ansprüche, **dadurch gekennzeichnet, dass** die Dicke des weichen und/oder des harten Schaumstoffmaterials (1, 3) über die Länge und/oder Breite des Sitzpolsters variiert.

6. Verfahren zur Herstellung des Fahrzeugsitzpolsters nach den voranstehenden Ansprüchen 1-5, bei dem ein erstes Schaumstoffmaterial (3) in einem flüssigen Zustand in ein Werkzeug (7) eingefüllt wird, wobei das erste Schaumstoffmaterial (3) im flüssigen Zustand mit einem Vlies (2) abgedeckt wird, wobei ein zweites Schaumstoffmaterial (1) in einem flüssigen Zustand in das Werkzeug (7) auf das Vlies (2) eingefüllt wird, wobei beide Schaumstoffmaterialien (1, 3) zumindest teilweise gleichzeitig in dem Werkzeug (7) härten, **dadurch gekennzeichnet, dass** das Gewebe des Vlieses (2) von mindestens einem der Schaumstoffmaterialien (1, 3) im flüssigen Zustand durchdrungen wird, wobei nach dem Aushärten das erste Schaumstoffmaterial (3) härter vorgesehen wird als das zweite Schaumstoffmaterial (1), wobei das erste Schaumstoffmaterial (3) im flüssigen Zustand zuerst in das Werkzeug (7) eingefüllt wird, wobei die zwei Schaumstoffmaterialien (1, 3) aus dem gleichen oder unterschiedlichen Werkstoffen hergestellt werden,wobei die Schaumstoffmaterialien (1, 3) einen Polyurethan-Schaumstoff umfassen, welcher auf Basis von MDI oder TDI hergestellt wird, wobei, das Vlies (2) das erste Schaumstoffmaterial (3) im flüssigen und ausgehärteten Zustand und das zweite Schaumstoffmaterial (1) im flüssigen und ausgehärteten Zustand über die gesamte Grenzfläche zwischen dem weicheren und dem härteren Schaumstoffmaterial (1, 3) separiert, , wobei das Vlies (2) mit mindestens einer der beiden Schaumstoffmaterialien (1, 3) eine stoffschlüssige Verbindung eingeht, wobei Schäume der Schaumstoffmaterialien (1, 3) eine Dichte zwischen 30 und 90 g/l aufweisen, wobei das weichere Schaumstoffmaterial eine Härte zwischen 3 und 20 kPa bei 40% und 4 Zyklen hat, wobei das härtere Schaumstoffmaterial eine Härte von 3 bis 20 kPa bei 40% und 4 Zyklen hat.

7. Verfahren nach Anspruch 6, **dadurch gekennzeichnet, dass** das Vlies (2) an einem, vorzugsweise beweglichen, Rahmen (5) vorgesehen wird.

8. Werkzeug (7) zur Herstellung eines Fahrzeugsitzpolsters (8) nach einem der voranstehenden Ansprüche 1-5 wobei es ein Unterteil (6), ein Oberteil (4) und einen dazwischen angeordneten Rahmen (5), der das Vlies (2) hält, aufweist, wobei das Unterteil (6) dazu ausgebildet ist, ein erstes Schaumstoffmaterial (3) im flüssigen Zustand aufzunehmen, wobei der Rahmen (5) dazu ausgebildet ist, auf das Unterteil (6) abgesenkt zu werden, wobei das Vlies (2) auf seiner dem Oberteil (4) zugewandten Oberfläche dazu ausgebildet ist, ein zweites Schaumstoffmaterial (1) im flüssigen Zustand aufzunehmen, wobei das Oberteil (4) dazu ausgebildet ist, auf den Rahmen (5) abgesenkt zu werden und dadurch das Werkzeug (7) zumindest weitestgehend abzudichten, **dadurch gekennzeichnet, dass** das Vlies (2) so vorgesehen ist, dass es von mindestens einem der zwei Schaumstoffmaterialien (1, 3) im flüssigen Zustand durchdringbar ist, wobei das Vlies (2) dazu ausgebildet ist, mit mindestens einer der beiden Schaumstoffmaterialien (1, 3) eine stoffschlüssige Verbindung einzugehen, wobei beide Schaumstoffmaterialien (1, 3) gleichzeitig aushärtbar sind, wobei die Schaumstoffmaterialien (1, 3) einen Polyurethan-Schaumstoff umfassen, welcher auf Basis von MDI oder TDI herstellbar ist, wobei nach dem Aushärten das erste Schaumstoffmaterial (3) härter vorgesehen ist als das zweite Schaumstoffmaterial (1), wobei Schäume der Schaumstoffmaterialien (1, 3) eine Dichte zwischen 30 und 90 g/l aufweisen, wobei das weichere zweite Schaumstoffmaterial (1) eine Härte zwischen 3 und 20 kPa bei 40% und 4 Zyklen hat, wobei das härtere erste Schaumstoffmaterial (3) eine Härte von 3 bis 20 kPa bei 40% und 4 Zyklen hat.

## Claims

1. Vehicle seat cushion (8) which consists of at least two foam materials (1, 3) with in each case a different hardness, the two foam materials (1, 3) having been produced from the same or different materials, a nonwoven (2) being arranged between the foam materials (1, 3), **characterized in that** the nonwoven (2) extends over the entire interface between the softer and the harder foam material (1, 3), the fabric of the nonwoven (2) being provided in such a way that it can be penetrated by at least one of the two foam materials (1, 3) in the liquid state, the nonwoven (2) being configured to enter into an integrally joined connection with at least one of the two foam materials (1, 3), it being possible for the two foam materials (1, 3) to be cured at the same time, the foam materials (1, 3) comprising a polyurethane foam which can be produced on the basis of MDI or TDI, foams of the foam materials (1, 3) having a density of between 30 and 90 g/l, the softer foam material having a hardness of between 3 and 20 kPa at 40% and 4 cycles, the harder foam material having a hardness of from 3 to 20 kPa at 40% and 4 cycles.

2. Vehicle seat cushion according to Claim 1, **characterized in that** the nonwoven (2) is a plastic material, in particular a plastic fabric.

3. Vehicle seat cushion according to either of the preceding claims, **characterized in that** the thickness of the soft foam material (1) is at least 5 mm.

4. Vehicle seat cushion according to one of the preceding claims, **characterized in that** the thickness of the hard foam material (3) is at least 5 mm.

5. Vehicle seat cushion according to one of the preceding claims, **characterized in that** the thickness of the soft and/or the hard foam material (1, 3) varies over the length and/or width of the seat cushion.

6. Method for producing the vehicle seat cushion according to the preceding Claims 1 to 5, in which method a first foam material (3) is filled in a liquid state into a mould (7), the first foam material (3) being covered in the liquid state with a nonwoven (2), a second foam material (1) being filled in a liquid state into the mould (7) onto the nonwoven (2), the two foam materials (1, 3) curing at least partially at the same time in the mould (7), **characterized in that** the fabric of the nonwoven (2) is penetrated by at least one of the foam materials (1, 3) in the liquid state, the first foam material (3) being provided in a harder state after the curing than the second foam material (1), the first foam material (3) first of all being filled in the liquid state into the mould (7), the two foam materials (1, 3) being produced from the same or different materials, the foam materials (1, 3) comprising a polyurethane foam which is produced on the basis of MDI or TDI, the nonwoven (2) separating the first foam material (3) in the liquid and cured state and the second foam material (1) in the liquid and cured state over the entire interface between the softer and the harder foam material (1, 3), the nonwoven (2) entering into an integrally joined connection with at least one of the two foam materials (1, 3), foams of the foam materials (1, 3) having a density of between 30 and 90 g/l, the softer foam material having a hardness of between 3 and 20 kPa at 40% and 4 cycles, the harder foam material having a hardness of from 3 to 20 kPa at 40% and 4 cycles.

7. Method according to Claim 6, **characterized in that** the nonwoven (2) is provided on a frame (5) which is preferably movable.

8. Mould (7) for producing a vehicle seat cushion (8) according to one of the preceding Claims 1 to 5, the said mould (7) having a lower part (6), an upper part (4) and a frame (5) which is arranged in between and holds the nonwoven (2), the lower part (6) being configured to receive a first foam material (3) in the liquid state, the frame (5) being configured to be lowered onto the lower part (6), the nonwoven (2) being configured on its surface which faces the upper part (4) to receive a second foam material (1) in the liquid state, the upper part (4) being configured to be lowered onto the frame (5) and to at least largely seal the mould (7) as a result, **characterized in that** the nonwoven (2) is provided in such a way that it can be penetrated by at least one of the two foam materials (1, 3) in the liquid state, the nonwoven (2) being configured to enter into an integrally joined connection with at least one of the two foam materials (1, 3), it being possible for the two foam materials (1, 3) to be cured at the same time, the foam materials (1, 3) comprising a polyurethane foam which can be produced on the basis of MDI or TDI, the first foam material (3) being provided in a harder state after the curing than the second foam material (1), foams of the foam materials (1, 3) having a density of between 30 and 90 g/l, the softer second foam material (1) having a hardness of between 3 and 20 kPa at 40% and 4 cycles, the harder first foam material (3) having a hardness of from 3 to 20 kPa at 40% and 4 cycles.

## Revendications

1. Rembourrage de siège automobile (8), qui est constitué d'au moins deux matériaux de mousse (1, 3) ayant chacun une dureté différente, les deux matériaux de mousse (1, 3) ayant été fabriqués à partir de matériaux identiques ou différents, un non-tissé (2) étant agencé entre les matériaux de mousse (1, 3), **caractérisé en ce que** le non-tissé (2) s'étend sur l'ensemble de l'interface entre le matériau de mousse plus mou et le matériau de mousse plus dur (1, 3), le tissu du non-tissé (2) étant prévu de manière à pouvoir être pénétré par au moins un des deux matériaux de mousse (1, 3) à l'état liquide, le non-tissé (2) étant configuré pour former une liaison par accouplement de matière avec au moins un des deux matériaux de mousse (1, 3), les deux matériaux de mousse (1, 3) pouvant être durcis simultanément, les matériaux de mousse (1, 3) comprenant une mousse de polyuréthane, qui peut être fabriquée à base de MDI ou de TDI, les mousses des matériaux de mousse (1, 3) présentant une densité comprise entre 30 et 90 g/l, le matériau de mousse plus mou ayant une dureté comprise entre 3 et 20 kPa à 40 % et 4 cycles, le matériau de mousse plus dur ayant une dureté de 3 à 20 kPa à 40 % et 4 cycles.

2. Rembourrage de siège automobile selon la revendication 1, **caractérisé en ce que** le non-tissé (2) est un matériau en matière plastique, notamment un tissu en matière plastique.

3. Rembourrage de siège automobile selon l'une quelconque des revendications précédentes, **caractérisé en ce que** l'épaisseur du matériau de mousse mou (1) est d'au moins 5 mm.

4. Rembourrage de siège automobile selon l'une quelconque des revendications précédentes, **caractérisé en ce que** l'épaisseur du matériau de mousse dur (3) est d'au moins 5 mm.

5. Rembourrage de siège automobile selon l'une quelconque des revendications précédentes, **caractérisé en ce que** l'épaisseur du matériau de mousse mou et/ou dur (1, 3) varie sur la longueur et/ou la largeur du rembourrage de siège.

6. Procédé de fabrication du rembourrage de siège automobile selon les revendications 1 à 5 précédentes, selon lequel un premier matériau de mousse (3) est placé à un état liquide dans un moule (7), le premier matériau de mousse (3) étant recouvert à l'état liquide avec un non-tissé (2), un deuxième matériau de mousse (1) étant placé à un état liquide dans le moule (7) sur le non-tissé (2), les deux matériaux de mousse (1, 3) durcissant au moins en partie simultanément dans le moule (7), **caractérisé en ce que** le tissu du non-tissé (2) est pénétré par au moins un des matériaux de mousse (1, 3) à l'état liquide, le premier matériau de mousse (3) étant prévu pour être plus dur que le deuxième matériau de mousse (1) après le durcissement, le premier matériau de mousse (3) à l'état liquide étant placé en premier dans le moule (7), les deux matériaux de mousse (1, 3) étant fabriqués en des matériaux identiques ou différents, les matériaux de mousse (1, 3) comprenant une mousse de polyuréthane, qui est fabriquée à base de MDI ou de TDI, le non-tissé (2) séparant le premier matériau de mousse (3) à l'état liquide et durci et le deuxième matériau de mousse (1) à l'état liquide et durci sur l'ensemble de l'interface entre le matériau de mousse plus mou et le matériau de mousse plus dur (1, 3), le non-tissé (2) formant une liaison par accouplement de matière avec au moins un des deux matériaux de mousse (1, 3), les mousses des matériaux de mousse (1, 3) présentant une densité comprise entre 30 et 90 g/l, le matériau de mousse plus mou ayant une dureté comprise entre 3 et 20 kPa à 40 % et 4 cycles, le matériau de mousse plus dur ayant une dureté de 3 à 20 kPa à 40 % et 4 cycles.

7. Procédé selon la revendication 6, **caractérisé en ce que** le non-tissé (2) est prévu sur un cadre (5), de préférence mobile.

8. Moule (7) pour la fabrication d'un rembourrage de siège automobile (8) selon l'une quelconque des revendications 1 à 5 précédentes, qui comprend une partie inférieure (6), une partie supérieure (4) et un cadre (5) agencé entre les deux, qui supporte le non-tissé (2), la partie inférieure (6) étant configurée pour recevoir un premier matériau de mousse (3) à l'état liquide, le cadre (5) étant configuré pour être abaissé sur la partie inférieure (6), le non-tissé (2) étant configuré sur sa surface orientée vers la partie supérieure (4) pour recevoir un deuxième matériau de mousse (1) à l'état liquide, la partie supérieure (4) étant configurée pour être abaissée sur le cadre (5) et ainsi pour étanchéifier au moins essentiellement le moule (7), **caractérisé en ce que** le non-tissé (2) est prévu pour pouvoir être pénétré par au moins un des deux matériaux de mousse (1, 3) à l'état liquide, le non-tissé (2) étant configuré pour former une liaison par accouplement de matière avec au moins un des deux matériaux de mousse (1, 3), les deux matériaux de mousse (1, 3) pouvant être durcis simultanément, les matériaux de mousse (1, 3) comprenant une mousse de polyuréthane, qui peut être fabriquée à base de MDI ou de TDI, le premier matériau de mousse (3) étant prévu pour être plus dur que le deuxième matériau de mousse (1) après le durcissement, les mousses des matériaux de mousse (1, 3) présentant une densité comprise entre 30 et 90 g/l, le deuxième matériau de mousse plus mou (1) ayant une dureté comprise entre 3 et 20 kPa à 40 % et 4 cycles, le premier matériau de mousse plus dur (3) ayant une dureté de 3 à 20 kPa à 40 % et 4 cycles.
